# EUROPEAN PATENT APPLICATION

(11) **EP 2 028 771 A1**
(43) Date of publication of application: **25.02.2009**
(21) Application number: 06766559.6
(22) Date of filing: 09.06.2006
(51) Int. Cl.: H04B 7/08, H04B 7/26

(54) **DIVERSITY RECEIVING DEVICE AND DIVERSITY RECEIVING METHOD**

(71) Applicant: Panasonic Corporation, Kadoma-shi Osaka 571-8501 (JP)
(72) Inventor: YOKONAGA, Hiroyuki c/o Panasonic Corp, IPROC, Chuo-ku, Osaka 540-6207 (JP); IMAGAWA, Yasumi c/o Panasonic Corp, IPROC, Chuo-ku, Osaka 540-6207 (JP); SASAKI, Makoto c/o Panasonic Corp., IPROC, Chuo-ku, Osaka 540-6207 (JP)
(74) Representative: Grünecker, Kinkeldey, Stockmair & Schwanhäusser Anwaltssozietät
(86) International application number: PCT/JP2006/311647
(87) International publication number: WO 2007/141878

(57) **Abstract**

It is a theme of the present invention to provide a diversity receiving device and a diversity receiving method capable of making a diversity start not to cause receiving errors and also improving a sensitivity. There is a difference in a jamming wave level that is allowed to get the same received quality between the diversity reception and the single branch reception, so that a gain improving effect equivalent to a diversity gain is expected by the diversity reception in contrast to the single branch reception. Therefore, a dynamic range of the jamming wave from a transmitting portion (105) of a second radio system in a radio terminal is set smaller in expectation of the improving effect of such jamming wave resistance, and then a transmission control signal (S117) is acquired from a transmission signal controlling portion (106). Thus, the diversity reception is started before a start of transmission, and diversity control is applied adaptively without deterioration of the received quality. With such arrangement, NF of the system is improved at the same time, and as a result a receiving sensitivity in both the single branch reception and the diversity reception can be improved.

## Description

### Technical Field

The present invention relates to a diversity receiving device and a diversity receiving method suitable for use in a radio terminal that is equipped with a plurality of radio systems such as a mobile radio terminal, a digital terrestrial broadcasting, and the like.

### Background Art

Recently the so-called radio terminal equipped with plural types of radio systems for use in communication, digital terrestrial broadcasting, and the like in one mobile radio terminal is spreading.

Also, the mobile radio terminal is used not only in walking in the streets, or the like but also in transit by a train, a car, or the like. Therefore, the mobile radio terminal is readily affected by the multipath fading, and the stable receiving operation becomes difficult. As a means for solving this problem, the multipath fading compensation technology is employed. In the prior art, the diversity reception is employed as the the multipath fading compensation technology (see Non-Patent Literature 1 and Non-Patent Literature 2, for example).

There are the selection diversity system and the synthesis diversity system in the diversity receiving system when roughly classified. The selection diversity system has a low diversity effect and is unable to get a sufficient communication quality because only one receiving system is provided, and the reliability is low. In contrast, the synthesis diversity system has a high diversity effect and is able to get a sufficient communication quality because two receiving systems are provided, and the reliability is high. However, such problems exist that the synthesis diversity system has two times a circuit scale and a consumption power of the selection diversity system because two receiving systems are provided, and thus a cost adds up correspondingly. In the prior art, as the synthesis diversity system that intends to reduce a consumption power, there is the adaptive control type diversity receiving device that starts adaptively the synthesis diversity reception in response to a received quality (e.g., BER (Bit Error Rate) or PER (Packet Error Rate)) and switches adaptively a receiving mode between the single branch receiving mode and the diversity receiving mode (see Patent Literature 1 and Patent Literature 2, for example). The adaptive control type diversity receiving device starts the diversity reception when the received quality is deteriorated. For this reason, a reduction of the consumption power can be attained, and this adaptive control type diversity receiving device is suitable for a mobile radio terminal of which greater power savings are required.

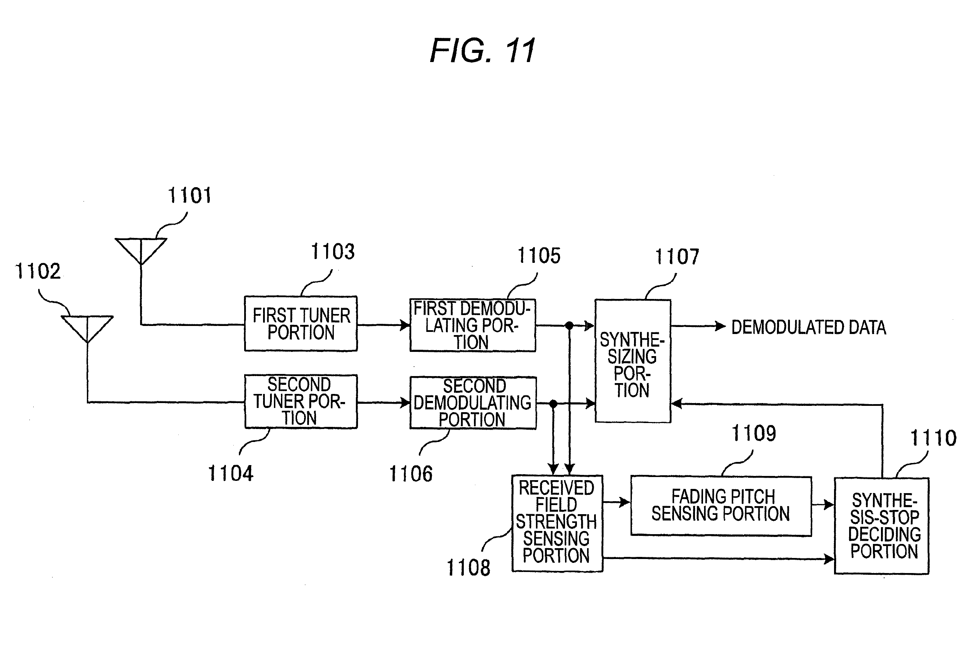

FIG.11 is a block diagram showing a schematic configuration of the diversity receiving device that improves a receiving performance by selecting a plurality of antennas in the prior art. The diversity receiving device shown in FIG.11 is constructed by a first antenna 1101, a second antenna 1102, a first tuner portion 1103, a second tuner portion 1104, a first demodulating portion 1105, a second demodulating portion 1106, a synthesizing portion 1107, a received field strength sensing portion 1108, a fading pitch sensing portion 1109, and a synthesis-stop deciding portion 1110.

The first antenna 1101 and the second antenna 1102 operate as diversity antennas. The first tuner portion 1103 and the second tuner portion 1104 turn in to a desired channel from received signals from the first antenna 1101 and the second antenna 1102 respectively. The first demodulating portion 1105 and the second demodulating portion 1106 demodulate signals from the first tuner portion 1103 and the second tuner portion 1104 respectively. The synthesizing portion 1107 demodulated data synthesizes respective signals from the first demodulating portion 1105 and the second demodulating portion 1106 and outputs a resultant signal as demodulated data. The received field strength sensing portion 1108 calculates a field strength value from respective signals from the first demodulating portion 1105 and the second demodulating portion 1106 and outputs a resultant value. The fading pitch sensing portion 1109 senses a fading frequency based on the field strength value from the received field strength sensing portion 1108. The synthesis-stop deciding portion 1110 calculates a threshold that is best suited to stop the synthesis, based on the value of the fading pitch sensing portion 1109, and commands the synthesizing portion 1107 to stop the synthesis after it decides that the field strength value from the received field strength sensing portion 1108 satisfies the threshold. With the above configuration and operation, the low power consumption can be achieved by switching adaptively the receiving mode between the diversity reception and the single branch reception in response to the received field strength, the received quality, and the fading frequency.

Meanwhile, in the radio terminal equipped with a plurality of radio systems such as a mobile radio terminal, a digital terrestrial broadcasting, and the like, a jamming wave signal eliminating filter such as BPF (Band Pass Filter) is provided to a receiving portion in one radio system (e.g., digital terrestrial broadcasting) such that the received signal is not suppressed by a signal that a transmitting portion of the other radio system (e.g., mobile phone communication) transmits (see Non-Patent Literature 3, for example). In this event, when observed from the receiving portion side of one radio system, the signal that a transmitting portion of the other radio system transmits acts as the jamming signal.

Patent Literature 1: JP-A-2000-357983
Patent Literature 2: JP-A-8-223108
Non-Patent Literature 1: Sanpei Seiichi, "Digital Wireless Transmission Technology", Pearson Education Japan, September 1, 2002, p.146-154
Non-Patent Literature 2: Saito Yoichi, "Modulation/ Demodulation of Digital Radio Communication", The institute of Electronics, Information, and Communication Engineers, February 10, 1996, p.189-193
Non-Patent Literature 3: Behzad Razavi, "RF Microelectronics", Maruzen Co., Ltd, March 25, 2003, p.129-133

### Disclosure of the Invention

### Problems that the Invention is to Solve

By the way, the diversity receiving device in the prior art has problems described as follows.
The diversity reception is started after a deterioration of the received quality is detected. Since the start of the diversity reception is delayed in timing from occurrence of the deterioration of the received quality, a data error (also called a receiving error) easily occurs. In this case, when the diversity reception is started before the deterioration of the received quality occurs, an operation time is prolonged correspondingly and a power consumption is increased.

When the diversity receiving device is applied to the radio terminal equipped with a plurality of radio systems, the jamming wave signal eliminating filter such as BPF, or the like is provided such that the received signal in the receiving portion of one radio system is not suppressed by the signal that is transmitted by the transmitting portion of the other radio system. In this case, an insertion loss is generated in the receiving band to ensure an attenuation level that is needed to suppress the jamming wave signal, and an NF (Noise Figure) of the receiver is degraded. As a result, a receiving sensitivity is deteriorated. Commonly an insertion loss in the receiving band tends to increase when the attenuation level to suppress the jamming wave is increased. An attenuation amount out of the receiving band and an insertion loss within the receiving band have a tradeoff relationship.

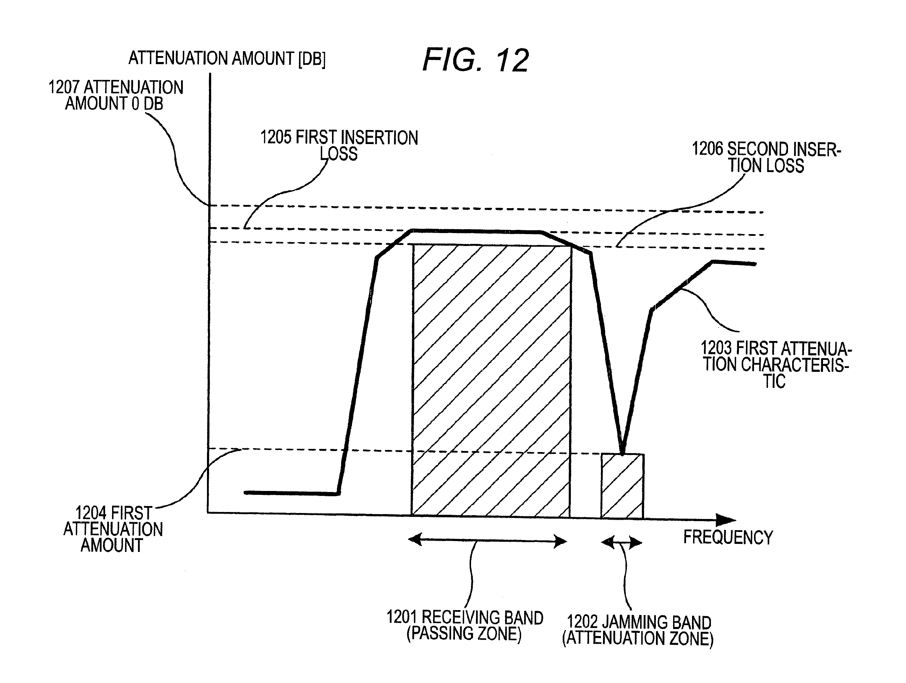

FIG.12 is a view showing a relationship between an attenuation amount out of the receiving band and an insertion loss within the receiving band. In FIG.12, an abscissa denotes a frequency and an ordinate denotes an attenuation amount. A reference numeral 1201 denotes a receiving band (passing zone), 1202 denotes a jamming band (attenuation zone), 1203 denotes a first attenuation characteristic, 1204 denotes a first attenuation amount obtained in the jamming band according to the first attenuation characteristic, 1205 denotes a first insertion loss obtained in the receiving band according to the first attenuation characteristic, 1206 denotes a second insertion loss obtained in the receiving band according to the first attenuation characteristic, and 1207 denotes a line positioned at an attenuation amount 0 dB. For example, in the case of the broadband radio system such as the terrestrial television broadcasting, or the like, it is difficult to ensure an attenuation amount out of the receiving band while suppressing an insertion loss within the receiving band. The second insertion loss 1206 on the higher channel side in the receiving band 1201 becomes larger than the first insertion loss 1205 on the lower channel side, and a difference of NF occurs between the channels. As a result, a difference of the sensitivity occurs, and a deterioration of the receiving sensitivity is caused on the higher channel side.

The present invention has been made in view of such circumstances, and it is an object of the present invention to provide a diversity receiving device and a diversity receiving method capable of making a diversity start not to cause receiving errors and also improving a sensitivity.

### Means for Solving the Problems

A diversity receiving device of the present invention used in a first radio system of a radio terminal that is equipped with the first radio system and a second radio system, includes a received quality sensing portion for sensing a received quality of the first radio system; a transmission control signal sensing portion for sensing a transmission control signal that brings the second radio system into a transmission state; and a controlling portion for continuing a diversity reception when the first radio system is in a diversity receiving state at a point of time the transmission control signal is sensed, and starting a synthesized diversity reception in response to the received quality when the first radio system is in a single branch receiving state at a point of time the transmission control signal is sensed.

The diversity receiving device of the present invention further includes a transmission level signal sensing portion for sensing a transmission level signal in response to a transmitted output of the second radio system; wherein the controlling portion continues a single branch reception when the first radio system is in the single branch receiving state and the transmission level signal is less than a predetermined value at a point of time the transmission control signal is sensed.

A radio terminal of the present invention equipped with a digital terrestrial broadcasting receiver as the first radio system and a cellular phone receiver as the second radio system, includes the diversity receiving device of the present invention.

In the radio terminal of the present invention, an attenuation amount of a receiving filter in the second radio system is set to an attenuation amount that is reduced by a diversity gain in the diversity reception.

A diversity receiving method of the present invention applicable for an equipment into which a first radio system having a diversity receiving function and a second radio system for transmitting a modulated signal are incorporated together, includes sensing a received quality based on a demodulated result of the first radio system; continuing a diversity reception if the first radio system is in a diversity receiving state when the second radio system is brought into a transmission state; and starting the diversity reception in response to a received quality if the first radio system is in a single branch receiving state when the second radio system is brought into the transmission state.

In the diversity receiving method of the present invention, a transmitted output of the second radio system is sensed, and then the single branch reception is continued when the first radio system is in the single branch receiving state and the transmitted output of the second radio system is less than a predetermined value when the second radio system is brought into the transmission state.

### Advantages of the Invention

The diversity receiving device of the present invention starts the diversity reception in advance based on the transmission control signal that brings the second radio system into the transmitting state. Therefore, no receiving error is caused, and a receiving sensitivity can be improved.

Also, the transmission level signal responding to the transmitted output of the radio system that transmits the modulated signal is sensed. Thus, the single branch reception is continued when the first radio system is in the single branch receiving state and the transmitted output of the second radio system is less than a predetermined value at a point of time the transmission control signal is sensed. Therefore, the diversity reception is not started unnecessarily, and a power saving can be attained.

The diversity receiving device of the present invention is equipped with the diversity receiving device of the present invention. Therefore, the similar advantages to those mentioned above can be achieved.

Also, the diversity gain can be obtained by starting the diversity reception even when the second radio system is put in the transmitting state. Therefore, improvement of the receiving sensitivity can be achieved, and correspondingly the attenuation amount of the receiving filter of the second radio system can be reduced.

The diversity receiving device of the present invention starts the diversity reception when the second radio system for transmitting the modulated signal is brought into the transmission state. Therefore, no receiving error is caused, and a receiving sensitivity can be improved.

Also, the transmitted output of the second radio system that transmits the modulated signal is sensed. Thus, the single branch reception is continued when the transmitted output of the second radio system is less than a predetermined value even though the first radio system is in the single branch receiving state at a point of time the second radio system is in the transmission state. Therefore, the diversity reception is not started unnecessarily, and a power saving can be attained.

### Brief Description of the Drawings

[FIG.1] A block diagram showing a schematic configuration of a radio terminal according to Embodiment 1 of the present invention.
[FIG.2] A block diagram showing a schematic configuration of a first receiving portion of the radio terminal according to Embodiment 1 of the present invention.
[FIG.3] A view showing the BPF characteristic in the first receiving portion of the radio terminal according to Embodiment 1 of the present invention.
[FIG.4] A view showing a relationship between a jamming wave D/U ratio and a BER in a receiving portion of a first radio system of the radio terminal according to Embodiment 1 of the present invention.
[FIG.5] A view showing contents of power control in a receiving mode in the radio terminal according to Embodiment 1 of the present invention.
[FIG.6] A flowchart explaining an operation of the radio terminal according to Embodiment 1 of the present invention.
[FIG.7] A view showing timings of a transmission timing signal and a receiving mode deciding signal in the radio terminal according to Embodiment 1 of the present invention.
[FIG.8] A view showing a relationship between an input C/N ratio and BER in the radio terminal according to Embodiment 1 of the present invention.
[FIG.9] A block diagram showing a schematic configuration of a radio terminal according to Embodiment 2 of the present invention.
[FIG.10] A view showing states of a transmission level signal and a receiving mode in the radio terminal according to Embodiment 2 of the present invention.
[FIG.11] A block diagram showing a schematic configuration of a diversity receiving device in the prior art.
[FIG.12] A view explaining an attenuation amount in a filter in the diversity receiving device in the prior art.

### Description of Reference Numerals

- 101: first antenna
- 102: second antenna
- 103: third antenna
- 104: receiving portion of a first radio system
- 105: transmitting portion of a second radio system
- 106: transmission signal controlling portion
- 107: first receiving portion
- 108: second receiving portion
- 109: first phase detecting portion
- 110: second phase detecting portion
- 111: synthesizing portion
- 112: demodulating/decoding portion
- 113: receive condition sensing portion
- 114: controlling portion
- 115: first modulating portion
- 116: first transmitting portion
- 201: band-pass filter
- 202: RF filter
- 203: local oscillator
- 204: mixer
- 205: low-pass filter
- 206: IF amplifier
- 207: A/D converter

### Best Mode for Carrying Out the Invention

Preferred embodiments for carrying out the present invention will be explained in detail with reference to the drawings hereinafter.

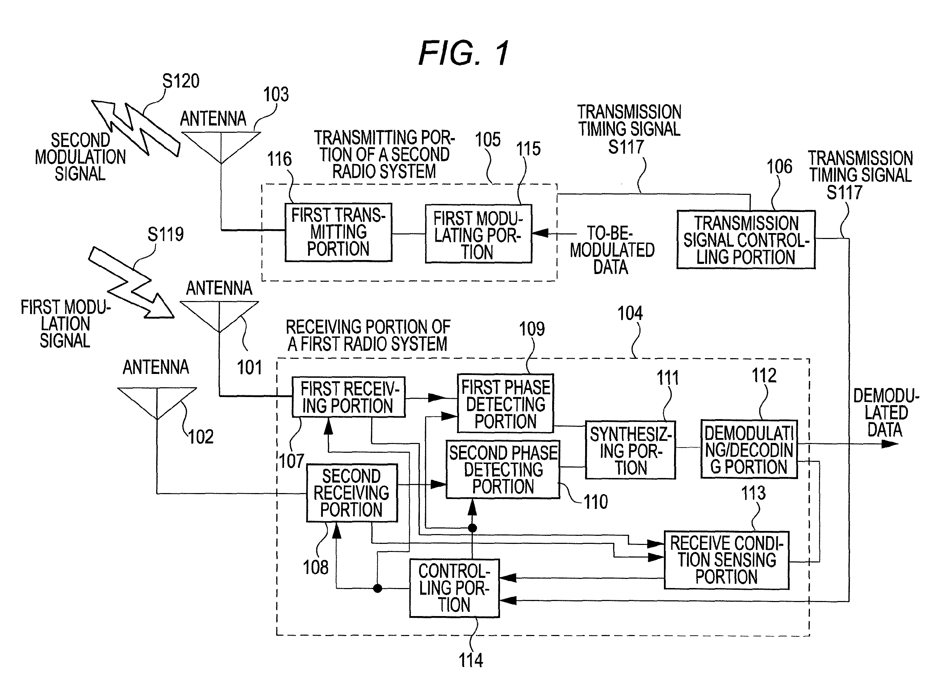

FIG.1 is a block diagram showing a schematic configuration of a radio terminal according to Embodiment 1 of the present invention. In FIG.1, the radio terminal of the present embodiment is equipped with a cellular phone and a digital terrestrial receiver, and is constructed to include a receiving portion (diversity receiving device) 104 of a first radio system as a receiving portion of the digital terrestrial receiver, a transmitting portion 105 of a second radio system as a transmitting portion of the cellular phone, and a transmission signal controlling portion 106 for performing a transmission control of the transmitting portion 105 of the second radio system.

The receiving portion 104 of the first radio system is constructed to include a first antenna 101, a second antenna 102, a first receiving portion 107, a second receiving portion 108, a first phase detecting portion 109, a second phase detecting portion 110, a synthesizing portion 111, a demodulating/decoding portion 112, a receive condition sensing portion (corresponding to a received quality sensing portion in claims) 113, and a controlling portion (containing a transmission control signal sensing portion in claims) 114. The transmitting portion 105 of the second radio system is constructed to include a third antenna 103, a first modulating portion 115, and a first transmitting portion 116. In FIG.1, a reference symbol S117 denotes a transmission timing signal, S119 denotes a first modulation signal, and S120 denotes a second modulation signal.

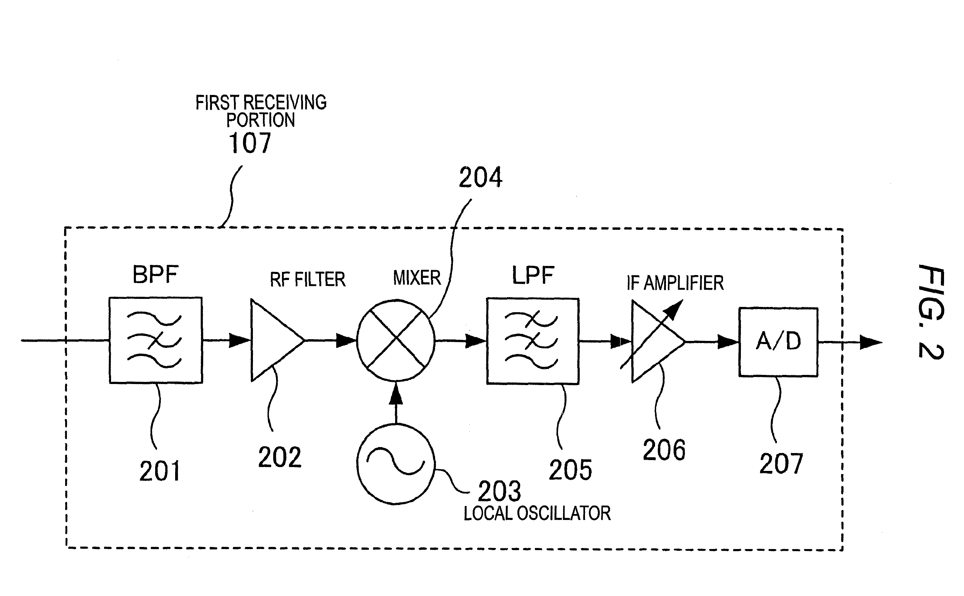

FIG.2 is a block diagram showing a schematic configuration of the first receiving portion 107 in the receiving portion 104 of the first radio system. In FIG.2, the first receiving portion 107 eliminates an outer-receiving band signal by a band-pass filter (called "BPF" hereinafter) 201, amplifies the received signal by an RF filter 202, and executes a frequency conversion by multiplying a sine signal of a local oscillator 203 and an output signal of the RF filter 202 by a mixer 204. Then, the first receiving portion 107 inputs an output signal of the mixer 204 a low-pass filter (LPF) 205 to performs the channel selection, and amplifies a signal by an IF amplifier 206. Then, the first receiving portion 107 converts the amplified signal into a digital signal by an A/D converter 207, and outputs the digital signal. The BPF 201 is inserted to eliminate an outer-receiving band jamming wave signal. Also, the second receiving portion 108 has the similar configuration to the first receiving portion 107.

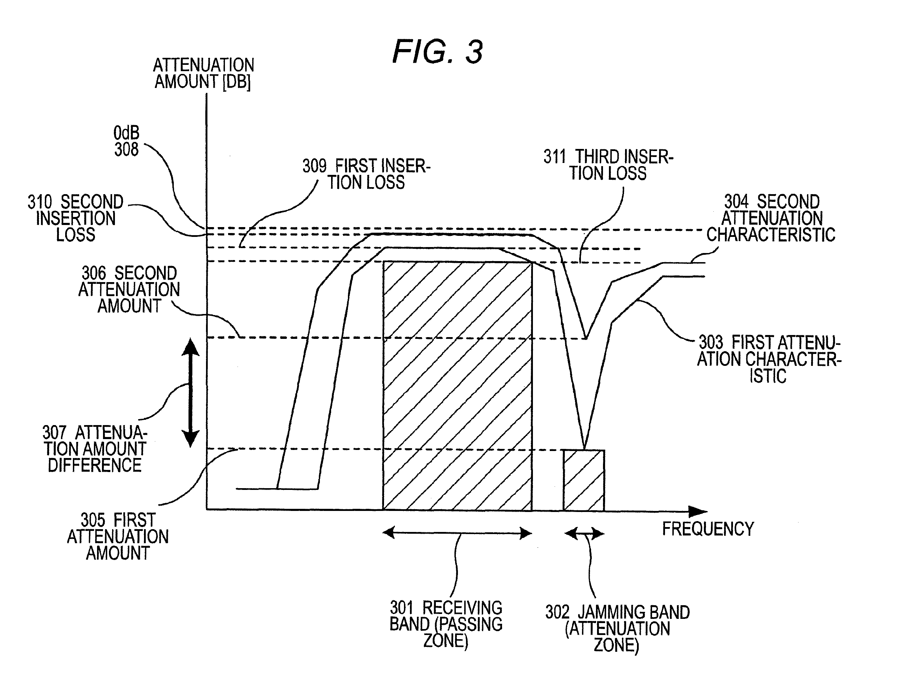

FIG.3 is a view showing an attenuation characteristic of the BPF 201 in the first receiving portion 107. In FIG.3, an abscissa denotes a frequency and an ordinate denotes an attenuation amount. A reference numeral 301 denotes a receiving band (passing zone), 302 denotes a jamming band (attenuation zone), 303 denotes an attenuation characteristic of the BPF necessary for the normal single reception (first attenuation characteristic), 304 denotes an attenuation characteristic in which a gain of the diversity reception is considered (second attenuation characteristic), and 305 denotes a first attenuation amount obtained in the jamming band 302 according to the first attenuation characteristic 303. Also, a reference numeral 306 denotes a second attenuation amount obtained in the jamming band 302 according to the second attenuation characteristic 304, 307 denotes a difference in attenuation amount between the first attenuation amount 305 and the second attenuation amount 306, and 308 denotes a line at an attenuation amount 0 dB. Also, a reference numeral 309 denotes a first insertion loss in the receiving band 301 according to the first attenuation characteristic 303, 310 denotes a second insertion loss in the receiving band 301 according to the second attenuation characteristic 304, and 311 denotes a third insertion loss on the higher channel in the receiving band according to the first attenuation characteristic 303. The attenuation characteristic in the BPF 201 must attenuate the signal by the first attenuation amount 305 from the first attenuation characteristic shown in FIG.3 to receive the signal without deterioration of the receiving sensitivity in the jamming band 302. Therefore, in this configuration, the attenuation amount in the jamming band 302 is relaxed by the diversity gain (the difference 307 in attenuation amount) to get the second attenuation characteristic 304, and the attenuation level agrees with the second attenuation amount 306. Accordingly, in this configuration, the filter attenuation amount required for the single reception is set smaller in expectation of the diversity reception, and thus the insertion loss of the BPF, etc. can be suppressed. As a result, deterioration of the noise figure of the receiver can be suppressed, and also the receiving sensitivity can be improved.

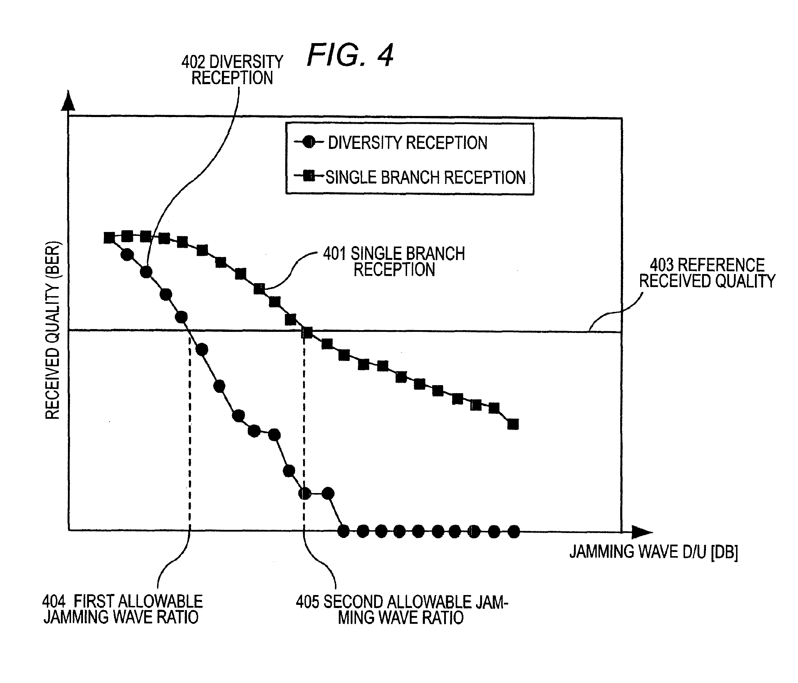

FIG.4 is a view showing a relationship between a ratio of a desired wave to a jamming wave (abbreviated as "D/U ratio" hereinafter) and a received quality (bit error rate: abbreviated as "BER" hereinafter) in the synthesis diversity reception and the single branch reception. In FIG.4, an abscissa denotes a D/U ratio, and an ordinate denotes BER. A reference numeral 401 denotes a characteristic of the BER to the D/U ratio in the single branch reception, and 402 denotes a characteristic of the BER to the D/U ratio in the diversity reception. When a reference received quality is set to a value indicated by a reference numeral 403, the D/U ratio must be set smaller than the D/U ratio indicated by a second allowable jamming wave ratio 405 to get the reference received quality 403 in the single branch reception 401. Also, the D/U ratio must be set smaller than the D/U ratio indicated by a first allowable jamming wave ratio 404 to get the reference received quality 403 in the diversity reception 402. A value obtained by subtracting the first allowable jamming wave ratio 404 from the second allowable jamming wave ratio 405 is mentioned as a diversity gain herein. The synthesis diversity shows such a characteristic that the jamming wave resistance is improved by the diversity gain.

Next, an operation of the radio terminal constructed as above will be explained hereunder. In the receiving portion 104 of the first radio system that can receive the first modulation signal S119, the first antenna 101 and the second antenna 102 are connected to the first receiving portion 107 and the second receiving portion 108 respectively, and the received first modulation signal S119 is input into the first receiving portion 107 and the second receiving portion 108 respectively. The first modulation signal S119 input into the first receiving portion 107 is subjected to the frequency conversion and output as a digital baseband signal, and is input into the first phase detecting portion 109. Also, the first modulation signal S119 input into the second receiving portion 108 is subjected to the frequency conversion and output as the digital baseband signal, and is input into the second phase detecting portion 110.

The digital baseband signals input into the first phase detecting portion 109 and the second phase detecting portion 110 are output as signals such that one signal is in phase with the other signal mutually, and the common mode synthesis is performed by the synthesizing portion 111. Then, the synthesized signal output from the synthesizing portion 111 is input into the demodulating/decoding portion 112 and demodulated/decoded there, and then is input into the receive condition sensing portion 113 as the demodulated signal (data). The received signal information of the first receiving portion 107 and the second receiving portion 108 as well as the demodulated signal are input into the receive condition sensing portion 113, and the received quality and the received CNR are calculated there. The result calculated by the receive condition sensing portion 113 is input into the controlling portion 114.

Meanwhile, in the transmitting portion 105 of the second radio system that transmits the second modulation signal S120, the to-be-modulated data is modulated by the first modulating portion 115, and the analog signal is output and input into the first transmitting portion 116. Then, the analog signal is subjected to the frequency conversion by the first transmitting portion 116, and output from the third antenna 103 as the second modulation signal S120. The transmission signal controlling portion 106 inputs the transmission timing signal S117 to the transmitting portion 105 of the second radio system as a trigger. The controlling portion 114 controls respective power supplies of the first receiving portion 107 and the first phase detecting portion 109 and the second receiving portion 108 and the second phase detecting portion 110, based on the transmission timing signal S117 from the transmission signal controlling portion 106 and the output result of the receive condition sensing portion 113.

As the receiving operation of the radio terminal of the present embodiment, there are the normal mode in which the transmitting portion 105 of the second radio system does not transmit the second modulation signal S120 via the third antenna 103 and the transmitting mode in which the transmitting portion 105 of the second radio system transmits the second modulation signal S120 via the third antenna 103. The transmitting portion 105 of the second radio system executes this control based on the transmission timing signal S117 from the transmission signal controlling portion 106. Also, there are a first single branch receiving mode, a second single branch receiving mode, and a diversity receiving mode in the receiving portion 104 of the first radio system.

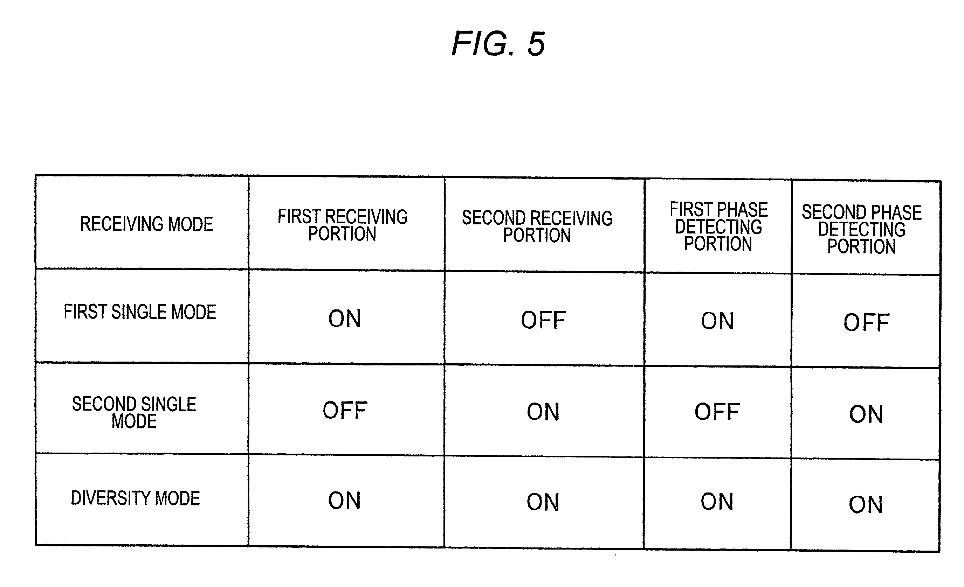

FIG.5 shows respective states of the power supplies in these three receiving modes.

In the first single branch receiving mode, the controlling portion 114 applies the power supply control such that respective power supplies of the first receiving portion 107 and the first phase detecting portion 109 are set to their ON state and respective power supplies of the second receiving portion 108 and the second phase detecting portion 110 are set to their OFF state. In the second single branch receiving mode, the controlling portion 114 applies the power supply control such that respective power supplies of the second receiving portion 108 and the second phase detecting portion 110 are set to their ON state and respective power supplies of the first receiving portion 107 and the first phase detecting portion 109 are set to their OFF state. In the diversity receiving mode, the controlling portion 114 applies the power supply control such that respective power supplies of the first receiving portion 107, the second receiving portion 108, the first phase detecting portion 109, and the second phase detecting portion 110 are set to their ON state.

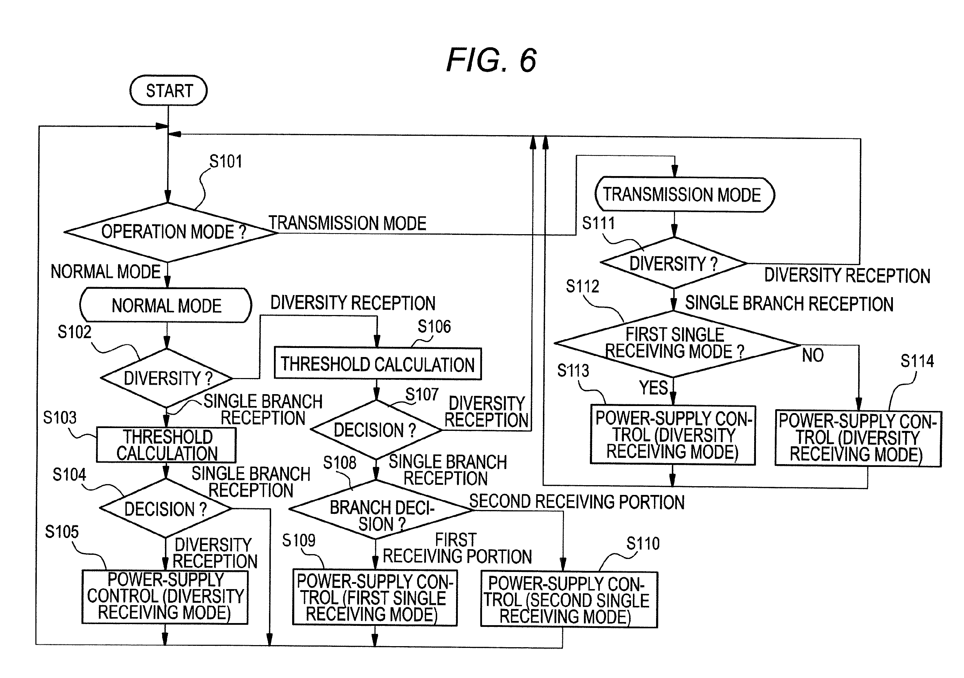

FIG.6 is a flowchart showing state controls of the radio terminal the present embodiment. In FIG.6, the controlling portion 114 gets the transmission timing signal S117 from the transmission signal controlling portion 106, and decides whether the operation mode is in the transmitting mode or the normal mode, i.e., whether or not the transmitting portion 105 of the second radio system transmits the signal (step S101). In the case of the normal mode, the controlling portion 114 decides to which receiving mode the present receiving mode belongs, out of the first single branch receiving mode, the second single branch receiving mode, and the diversity receiving mode (step S102). In the case of the first single branch receiving mode or the second single branch receiving mode, the controlling portion 114 calculates the threshold based on the calculated result obtained by the receive condition sensing portion 113 (step S103). The threshold decision is made (step S104). If the decision result indicates the continuation of the single branch reception, the process goes back again to step S101.

In contrast, in step S104, if the decision result indicates the diversity reception, the controlling portion 114 executes the power-supply control in the diversity receiving mode (step S105)(as to the control method of the power supply control, see FIG.5). Then, the process goes back to step S101. In step S102, if the present receiving mode is the diversity receiving mode, the controlling portion 114 calculates the threshold based on the calculated result obtained by the receive condition sensing portion 113 (step S106). Then, the controlling portion 114 decides whether the diversity reception should be continued or the receiving mode should be shifted to the single branch receiving mode (step S107). If it is decided that the receiving mode should be shifted to the single branch receiving mode, the branch decision is made (step S108). Then, the controlling portion 114 chooses the branch whose power supply should be turned OFF. In step S108, if the receiving mode is the first single branch receiving mode, the controlling portion 114 applies the power-supply control in such a way that the receiving mode is shifted to the first single branch receiving mode (step S109). In contrast, in step S108, if the receiving mode is the second single branch receiving mode, the controlling portion 114 applies the power-supply control in such a way that the receiving mode is shifted to the second single branch receiving mode (step S110). The process goes back to step S101 respectively after the power-supply control.

In contrast, in step S101, if it is decided that the operation mode is the transmitting mode, the controlling portion 114 decides whether or not the present receiving mode is the diversity receiving mode or the single branch receiving mode (step S111). If the present receiving mode is the diversity receiving mode, the process goes back to step S101. If the present receiving mode is the single branch receiving mode, the controlling portion 114 decides whether or not that single branch receiving mod is the first single receiving mode (step S112). If the single branch receiving mod is the first single receiving mode, the controlling portion 114 applied the power-supply control such that respective power supplies of the second receiving portion 108 and the second phase detecting portion 110 are turned ON (step S111). If the single branch receiving mod is the second single receiving mode, the controlling portion 114 applied the power-supply control such that the first receiving portion 107 and the first phase detecting portion 109 are turned ON (step S114). Then, the process goes back again to step S101.

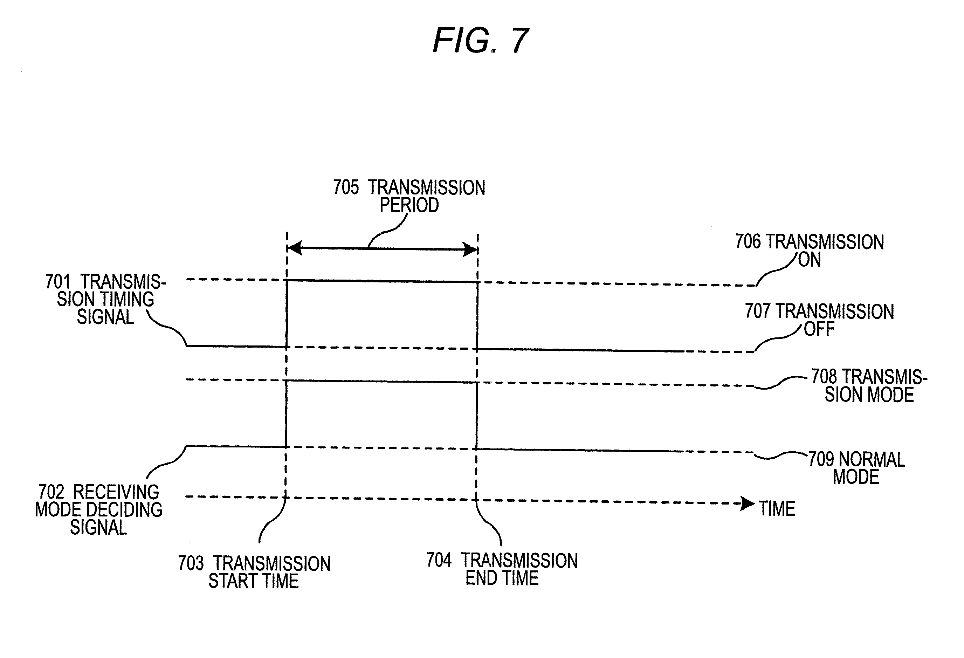

FIG.7 is a view showing the operation mode decision. In FIG.7, a reference numeral 701 denotes a transmission timing signal (corresponding to the transmission timing signal S117) being output from the transmission signal controlling portion 106 and input into the controlling portion 114, 702 denotes a receiving mode deciding signal, 703 denotes a transmission start time, 704 denotes a transmission end time, 705 denotes a transmission period, 706 denotes a transmission ON state of the transmitting portion 105 of the second radio system, 707 denotes a transmission OFF state of the transmitting portion 105 of the second radio system, 708 denotes a transmission mode ON state, and 709 denotes a normal mode ON state. As shown in FIG.7, the transmission timing signal 701 goes to the transmission ON state and simultaneously the receiving mode deciding signal 702 changes from the normal mode 709 to the transmission mode 708, and as a result the receiving portion 104 of the first radio system goes to the diversity receiving mode.

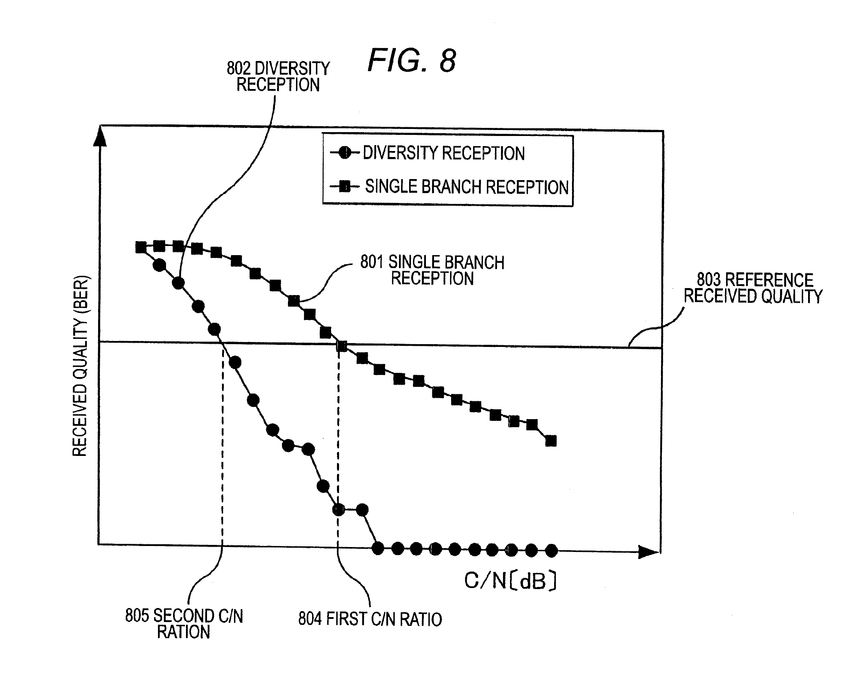

The controls shown in FIG.8, for example, are applied in the decision in step S104 and step S107 in FIG.6. Then, explanation will be made with reference to FIG.8 hereunder. In FIG.8, a reference numeral 801 denotes a characteristic curve of the received quality (BER) to the C/N ratio in the single branch reception, 802 denotes a characteristic curve of the received quality (BER) to the C/N ratio in the diversity reception, 803 denotes a reference received quality at which the demodulated signal can be kept in a predetermined received quality, 804 denotes a first C/N ratio required to get the reference received quality in the single branch reception, and 805 denotes a second C/N ration required to get the reference received quality in the diversity reception.

For example, when the C/N that is in excess of the first C/N ratio 804 is input into the receiver, the BER is less than the reference received quality 803. In contrast, when the C/N that is less than the first C/N ratio 804 is input, the BER exceeds the reference received quality in the single branch reception 801. Thus, the data loses reliability. In contrast, in the case of the diversity reception, when the C/N that is more than the second C/N ratio 805 is input, the BER is less than the reference received quality. Thus, if the control is applied such that the diversity reception is used when the input C/N ranges from the second C/N ratio 805 to the first C/N ratio 804 and also the single branch reception 801 is used when the C/N that is more than the first C/N ratio 804 is input, the diversity reception can be carried out effectively. Therefore, a current consumption can be reduced.

In the diversity receiving device that makes such operation, an improvement of the sensitivity is achieved by an amount of (first insertion loss)-(second insertion loss) in the single branch reception and the diversity reception. Also, in the broadband receiver such as a UHF band, or the like, an insertion loss is reduced in the filter improve amount in the high receiving channel by reducing the attenuation amount of the BPF 201 in the jamming band 302, and a sensitivity is improved. Further, when the transmission timing signal S117 is obtained in advance from the transmission signal controlling portion 106, the receiving mode can be shifted to the diversity receiving mode while suppressing an unnecessary error.

According to the radio terminal of the present embodiment, the received quality is sensed based on the demodulated result in the diversity receiving device as the receiving portion 104 of the first radio system, the diversity reception is continued as it is irrespective of the received quality when the diversity receiving state is still kept in a situation that the transmitting portion 105 of the second radio system is brought into the transmitting state, and the diversity reception is started in response to the received quality when the single branch reception is used in a situation that the transmitting portion 105 of the second radio system is brought into the transmitting state. Therefore, the receiving error is not caused, and improvement of the receiving sensitivity can be attained in both the single branch reception and the diversity reception.

Also, since the diversity reception is started even when the transmitting portion 105 of the second radio system is brought into the transmitting state, the diversity gain can be obtained. Therefore, the attenuation amount in the jamming wave eliminating filter applied to the signal being transmitted from the transmitting portion 105 of the second radio system can be reduced in answer to the improvement of the receiving sensitivity, and improvement of the receiving sensitivity can be attained.

Here, in the present embodiment, the receiving portion 104 of the first radio system having the receiving function and the transmitting portion 105 of the second radio system having the transmitting function are explained by using the first modulation signal S119 and the second modulation signal S120 as the model respectively. But the same modulation signal may be employed as the first modulation signal and the second modulation signal.

Also, in the present embodiment, the case where the antenna 103, the first transmitting portion 116, and the first modulating portion 115 in the transmitting portion 105 of the second radio system are provided solely respectively is explained. But the number of them is not limited to this case.

Also, in the synthesis in the synthesizing portion 111, the maximum ratio synthesis may be executed by assigning a weight to the signal on one side such that the S/N ratio is maximized after the phase synthesis.

Also, in FIG.3, the attenuation amount difference 307 is set to the diversity gain by taking the attenuation characteristic of the BPF 201 in FIG.2 as an example. But the attenuation characteristic from the BPF 201 to the IF antenna 206 in FIG.2 may be considered. In such case, most of the attenuation amount in the jamming band 302 is caused by the attenuation by the BPF 201 in FIG.2. Therefore, the insertion loss can be reduced by utilizing this configuration, and the receiving sensitivity can be improved.

Also, in the threshold calculation step S103 and the threshold calculation step S106 in FIG.6, the calculation is performed based on the information obtained from the demodulating/decoding portion 112 in the receiving portion 104 of the first radio system. In this case, in the present embodiment, the explanation is made by using the BER. But the fading frequency, the received C/N ratio, or their combination may be used.

Also, in many cases the transmission signal controlling portion 106 used to the transmission timing signal S117 is contained in the device such as DSP (Digital Signal Processor), or the like.

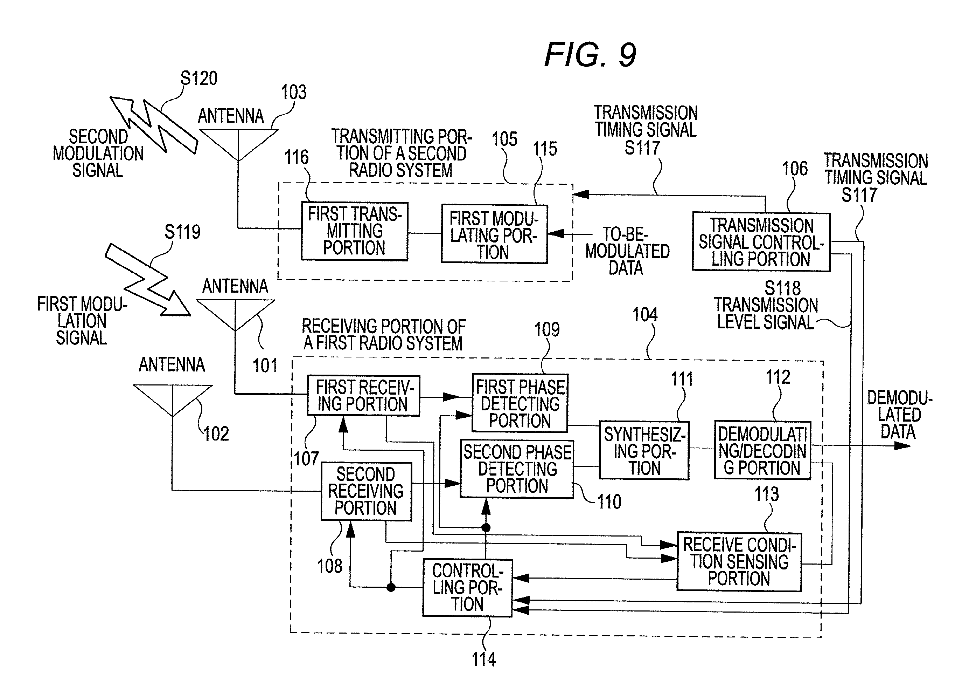

Next, Embodiment 2 of the present invention will be explained hereunder. FIG.9 is a block diagram showing a schematic configuration of a radio terminal according to Embodiment 2 of the present invention. In FIG.9, the similar reference symbols are affixed to the blocks having the similar functions to those in above FIG.1 (Embodiment 1).

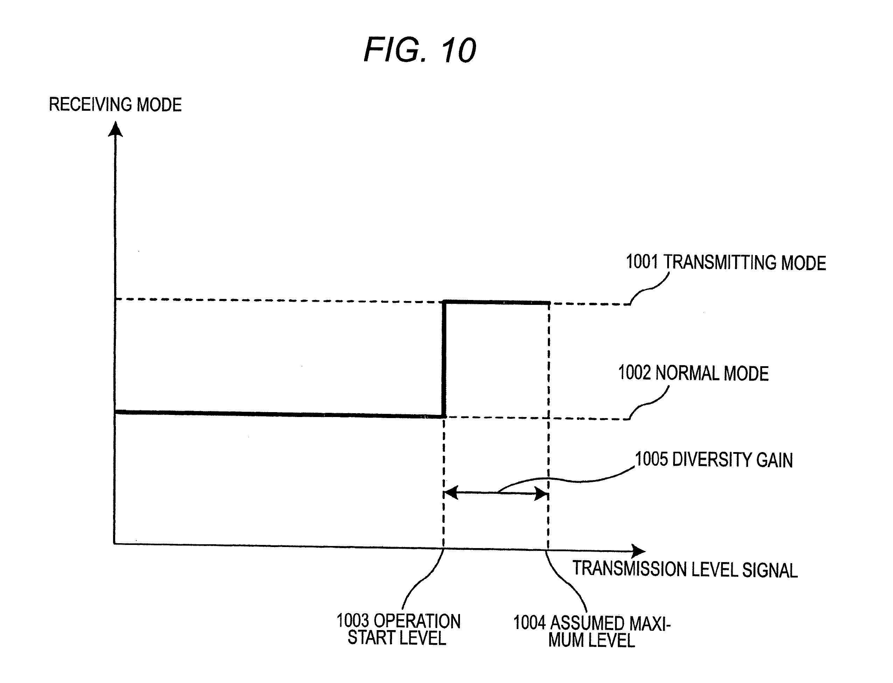

In FIG.9, the transmission signal controlling portion 106 inputs a transmission level signal S118, which is output in response to the power being fed now, as well as the transmission timing signal S117 to the controlling portion (containing the transmission level signal sensing portion set forth in claims) 114. FIG.10 is a view showing an output signal of the transmission level signal S118 and a change of the receiving mode. In FIG.10, an abscissa denotes a transmission level signal and an ordinate denotes a receiving mode, and two states of a transmitting mode 1001 and a normal mode 1002 are present in the receiving mode. A reference numeral 1003 denotes an operation start level that changes from the normal mode 1002 to the transmitting mode 1001 and goes to the transmitting mode 1001 when a transmission level signal that is more than the operation start level is input. Also, a reference numeral 1004 denotes a maximum level that is assumed by the transmission level signal S118. When the operation start level 1003 is set to (assumed maximum level 1004)-(diversity gain 1005) while employing the above configuration and operations, the unnecessary start of the diversity reception is eliminated even in a situation that the transmitting portion 105 of the second radio system is transmitting the signal. Thus, the power saving can be achieved.

In other words, the transmitted output of the transmitting portion 105 of the second radio system is always sensed. Then, if an output of the transmitting portion 105 of the second radio system is less than a predetermined value even though the receiving portion is in the single branch receiving state after the transmitting portion 105 is brought into its transmission state, the diversity reception is not started and the single branch reception is still continued as it is. Therefore, the unnecessary diversity operation can be suppressed and thus the power saving can be achieved.

### Industrial Applicability

The present invention possesses such advantages that the diversity start can be made without receiving errors and also a sensitivity can be improved, and is applicable to the radio terminal that is equipped with a plurality of radio systems such as the mobile phone, the digital terrestrial broadcasting, and the like.

## Claims

1. A diversity receiving device used in a first radio system of a radio terminal that is equipped with the first radio system and a second radio system, the diversity receiving device comprising:
a received quality sensing portion which senses a received quality of the first radio system;
a transmission control signal sensing portion which senses a transmission control signal that brings the second radio system into a transmission state; and
a controlling portion which continues a diversity reception when the first radio system is in a diversity receiving state at a point of time the transmission control signal is sensed, and starts a synthesized diversity reception in response to the received quality when the first radio system is in a single branch receiving state at a point of time the transmission control signal is sensed.

2. The diversity receiving device according to claim 1, further comprising:
a transmission level signal sensing portion which senses a transmission level signal in response to a transmitted output of the second radio system,
wherein the controlling portion continues a single branch reception when the first radio system is in the single branch receiving state and the transmission level signal is less than a predetermined value at a point of time the transmission control signal is sensed.

3. A radio terminal equipped with a digital terrestrial broadcasting receiver as the first radio system and a cellular phone receiver as the second radio system, comprising:
the diversity receiving device set forth in claim 1 or claim 2.

4. The radio terminal according to claim 3, wherein an attenuation amount of a receiving filter in the second radio system is set to an attenuation amount that is reduced by a diversity gain in the diversity reception.

5. A diversity receiving method applicable for an equipment into which a first radio system having a diversity receiving function and a second radio system for transmitting a modulated signal are incorporated together, the diversity receiving method comprising:
sensing a received quality based on a demodulated result of the first radio system;
continuing a diversity reception if the first radio system is in a diversity receiving state when the second radio system is brought into a transmission state; and
starting the diversity reception in response to a received quality if the first radio system is in a single branch receiving state when the second radio system is brought into the transmission state.

6. The diversity receiving method according to claim 5, wherein a transmitted output of the second radio system is sensed, and then the single branch reception is continued when the first radio system is in the single branch receiving state and the transmitted output of the second radio system is less than a predetermined value when the second radio system is brought into the transmission state.

## Amended claims

### Amended claims under Art. 19.1 PCT

**1.** Amended) A diversity receiving device used in a first radio system of a radio terminal that is equipped with the first radio system and a second radio system, the diversity receiving device comprising:
a received quality sensing portion which senses a received quality of the first radio system;
a transmission control signal sensing portion which senses a transmission control signal that brings the second radio system into a transmission state;
a controlling portion which continues a diversity reception when the first radio system is in a diversity receiving state at a point of time the transmission control signal is sensed, and starts a synthesized diversity reception in response to the received quality when the first radio system is in a single branch receiving state at a point of time the transmission control signal is sensed;
a transmission level signal sensing portion which senses a transmission level signal in response to a transmitted output of the second radio system,
wherein the controlling portion continues a single branch reception when the first radio system is in the single branch receiving state and the transmission level signal is less than a predetermined value at a point of time the transmission control signal is sensed.

**2.** (Deleted)

**3.** (Amended) A radio terminal equipped with a digital terrestrial broadcasting receiver as the first radio system and a cellular phone receiver as the second radio system, comprising:
the diversity receiving device set forth in claim 1.

**4.** (Amended) The radio terminal according to claim 3, wherein an attenuation amount of a receiving filter in the second radio system is set to an attenuation amount that is reduced by a diversity gain in the diversity reception with respect to an attenuation amount of a filter reqired in the single branch receiving.

**5.** (Amended) A diversity receiving method applicable for an equipment into which a first radio system having a diversity receiving function and a second radio system for transmitting a modulated signal are incorporated together, the diversity receiving method comprising:
sensing a received quality based on a demodulated result of the first radio system;
continuing a diversity reception if the first radio system is in a diversity receiving state when the second radio system is brought into a transmission state;
starting the diversity reception in response to a received quality if the first radio system is in a single branch receiving state when the second radio system is brought into the transmission state: and
sensing a transmitted output of the second radio system,
wherein the single branch reception is continued when the first radio system is in the single branch receiving state and the transmitted output of the second radio system is less than a predetermined value when the second radio system is brought into the transmission state.

**6.** (Deleted)
